# EUROPEAN PATENT APPLICATION

(11) **EP 4 525 517 A1**
(43) Date of publication of application: **19.03.2025**
(21) Application number: 23802731.2
(22) Date of filing: 04.05.2023
(51) Int. Cl.: H04W 36/00

(54) **METHOD AND APPARATUS FOR PROCESSING CONDITIONAL RECONFIGURATION INFORMATION, AND COMMUNICATION DEVICE**

(30) Priority: 07.05.2022 CN 202210492977
(71) Applicant: Vivo Mobile Communication Co., Ltd., Dongguan, Guangdong 523863 (CN)
(72) Inventor: BAO, Wei, Dongguan, Guangdong 523863 (CN); LIU, Xuanbing, Dongguan, Guangdong 523863 (CN)
(74) Representative: Cabinet Beaumont
(86) International application number: PCT/CN2023/092029
(87) International publication number: WO 2023/216959

(57) **Abstract**

This application discloses a method and apparatus for processing conditional reconfiguration information, and a communication device, pertaining to the field of communication technologies. The method for processing conditional reconfiguration information according to embodiments of this application includes: selecting, by a terminal, N sets of conditional reconfiguration information from M sets of stored conditional reconfiguration information, where the M sets of conditional reconfiguration information include conditional reconfiguration information applied to conditional PSCell change CPC and conditional reconfiguration information applied to conditional PSCell addition CPA, and N is less than M; and performing, by the terminal, conditional evaluation based on the N sets of conditional reconfiguration information.

## Description

### CROSS-REFERENCE TO RELATED APPLICATIONS

This application claims priority to Chinese Patent Application No. 202210492977.4, filed in China on May 7, 2022, which is incorporated herein by reference in its entirety.

### TECHNICAL FIELD

This application pertains to the field of communication technologies and specifically relates to a method and apparatus for processing conditional reconfiguration information, and a communication device.

### BACKGROUND

In the related art, after execution of conditional PSCell addition (Conditional PSCell Addition, CPA) or conditional PSCell change (Conditional PSCell Change, CPC), user equipment (User Equipment, UE) can no longer delete a stored CPA and/or CPC configuration. In this case, the UE has both CPA and CPC configurations, such that the UE performs CPC evaluation and CPA evaluation simultaneously, increasing the number of conditional reconfiguration evaluations executed by the UE, thereby increasing the power consumption of the terminal.

### SUMMARY

Embodiments of this application provide a method and apparatus for processing conditional reconfiguration information, and a communication device, so as to solve the problem that UE performs CPC evaluation and CPA evaluation simultaneously in a case that CPC configuration and CPA configuration are stored in the UE, which otherwise increases the number of conditional reconfiguration evaluations executed by the UE.

According to a first aspect, a method for processing conditional reconfiguration information is provided, including:
selecting, by a terminal, N sets of conditional reconfiguration information from M sets of stored conditional reconfiguration information, where the M sets of conditional reconfiguration information include conditional reconfiguration information applied to conditional PSCell change CPC and conditional reconfiguration information applied to conditional PSCell addition CPA, and N is less than M; and
performing, by the terminal, conditional evaluation based on the N sets of conditional reconfiguration information.

According to a second aspect, a method for processing conditional reconfiguration information is provided, including:
sending, by a network-side device, indication information to a terminal, where the indication information is used to indicate identifier information of conditional reconfiguration information that needs to be evaluated or does not need to be evaluated by the terminal.

According to a third aspect, a method for processing conditional reconfiguration information is provided, including:
sending, by a network-side device, M sets of conditional reconfiguration information to a terminal, where each set of conditional reconfiguration information includes: one configuration identifier, an execution condition associated with the configuration identifier, a conditional reconfiguration parameter associated with the configuration identifier, and category information of conditional reconfiguration, where
the category information includes at least one of a CPC category, a CPA category, and a CPC and CPA category.

According to a fourth aspect, an apparatus for processing conditional reconfiguration information is provided, applied to a terminal and including:
a first selecting module configured to select N sets of conditional reconfiguration information from M sets of stored conditional reconfiguration information, where the M sets of conditional reconfiguration information include conditional reconfiguration information applied to conditional PSCell change CPC and conditional reconfiguration information applied to conditional PSCell addition CPA, and N is less than M; and
a first processing module configured to perform conditional evaluation based on the N sets of conditional reconfiguration information.

According to a fifth aspect, an apparatus for processing conditional reconfiguration information is provided, applied to a network-side device and including:
a first sending module configured to send indication information to a terminal, where the indication information is used to indicate identifier information of conditional reconfiguration information that needs to be evaluated or does not need to be evaluated by the terminal.

According to a sixth aspect, an apparatus for processing conditional reconfiguration information is provided, applied to a network-side device and including:
a second sending module configured to send M sets of conditional reconfiguration information to a terminal, where each set of conditional reconfiguration information includes: one configuration identifier, an execution condition associated with the configuration identifier, a conditional reconfiguration parameter associated with the configuration identifier, and category information of conditional reconfiguration, where
the category information includes at least one of a CPC category, a CPA category, and a CPC and CPA category.

According to a seventh aspect, a terminal is provided. The terminal includes a processor and a memory. A program or instruction executable on the processor is stored in the memory. When the program or instruction is executed by the processor, the steps of the method according to the first aspect are implemented.

According to an eighth aspect, a terminal is provided, including a processor and a communication interface, where the processor is configured to: select N sets of conditional reconfiguration information from M sets of stored conditional reconfiguration information, where the M sets of conditional reconfiguration information include conditional reconfiguration information applied to conditional PSCell change CPC and conditional reconfiguration information applied to conditional PSCell addition CPA, and N is less than M; and perform conditional evaluation based on the N sets of conditional reconfiguration information.

According to a ninth aspect, a network-side device is provided. The network-side device includes a processor and a memory. A program or instruction executable on the processor is stored in the memory. When the program or instruction is executed by the processor, the steps of the method according to the second aspect or the third aspect are implemented.

According to a tenth aspect, a network-side device is provided, including a processor and a communication interface, where the communication interface is configured to send M sets of conditional reconfiguration information to a terminal, where each set of conditional reconfiguration information includes: one configuration identifier, an execution condition associated with the configuration identifier, a conditional reconfiguration parameter associated with the configuration identifier, and category information of conditional reconfiguration, where
the category information includes at least one of a CPC category, a CPA category, and a CPC and CPA category. Alternatively, the communication interface is configured to send indication information to a terminal, where the indication information is used to indicate identifier information of conditional reconfiguration information that needs to be evaluated or does not need to be evaluated by the terminal.

According to an eleventh aspect, a system for processing conditional reconfiguration information is provided, including a terminal and a network-side device. The terminal may be configured to execute the steps of the method according to the first aspect, and the network-side device may be configured to execute the steps of the method according to the second aspect or the third aspect.

According to a twelfth aspect, a readable storage medium is provided. A program or instruction is stored in the readable storage medium. When the program or instruction is executed by a processor, the steps of the method according to the first aspect are implemented, or the steps of the method according to the second aspect or the third aspect are implemented.

According to a thirteenth aspect, a chip is provided. The chip includes a processor and a communication interface, where the communication interface is coupled to the processor, and the processor is configured to run a program or instruction to implement the method according to the first aspect, the method according to the second aspect, or the method according to the third aspect.

According to a fourteenth aspect, a computer program/program product is provided. The computer program/program product is stored in a storage medium, and the computer program/program product is executed by at least one processor to implement the steps of the method according to the first aspect, the second aspect, or the third aspect.

In the embodiments of this application, the terminal selects N sets of conditional reconfiguration information from M sets of stored conditional reconfiguration information, where the M sets of conditional reconfiguration information includes conditional reconfiguration information applied to conditional PSCell change CPC and conditional reconfiguration information applied to conditional PSCell addition CPA, and N is less than M; and the terminal performs conditional evaluation based on the N sets of conditional reconfiguration information. In the above process, the terminal selects N sets of conditional reconfiguration information from M sets of conditional reconfiguration information and performs conditional evaluation based on the N sets of conditional reconfiguration information, for example, performing only CPC evaluation or only CPA evaluation, rather than performing CPC evaluation and CPA evaluation based on the M sets of stored conditional reconfiguration information, thereby reducing the number of conditional reconfigurations that need to be evaluated by the terminal, and reducing the power consumption and evaluation complexity of the terminal.

### BRIEF DESCRIPTION OF DRAWINGS

FIG. 1 is a structural diagram of a communication system to which embodiments of this application are applicable;
FIG. 2 is a first schematic flowchart of a method for processing conditional reconfiguration information according to an embodiment of this application;
FIG. 3 is a second schematic flowchart of a method for processing conditional reconfiguration information according to an embodiment of this application;
FIG. 4 is a third schematic flowchart of a method for processing conditional reconfiguration information according to an embodiment of this application;
FIG. 5 is a first schematic diagram of modules of an apparatus for processing conditional reconfiguration information according to an embodiment of this application;
FIG. 6 is a second schematic diagram of modules of an apparatus for processing conditional reconfiguration information according to an embodiment of this application;
FIG. 7 is a third schematic diagram of modules of an apparatus for processing conditional reconfiguration information according to an embodiment of this application;
FIG. 8 is a structural block diagram of a communication device according to an embodiment of this application;
FIG. 9 is a structural block diagram of a terminal according to an embodiment of this application; and
FIG. 10 is a structural block diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in the specification and claims of this application are used to distinguish between similar objects rather than to describe a specific order or sequence. It should be understood that terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited, for example, there may be one or more first objects. In addition, "and/or" in the specification and claims represents at least one of the connected objects, and the character "/" generally indicates that the contextually associated objects have an "or" relationship.

It should be noted that technologies described in the embodiments of this application are not limited to long term evolution (Long Term Evolution, LTE) or LTE-Advanced (LTE-Advanced, LTE-A) systems, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" are often used interchangeably in the embodiments of this application. The technologies described may be used in the above-mentioned systems and radio technologies as well as other systems and radio technologies. In the following descriptions, a new radio (New Radio, NR) system is described for illustration purposes, NR terms are used in most of the following descriptions, and these technologies may also be applied to other applications than the NR system application, for example, the 6th generation (6^{th} Generation, 6G) communication system.

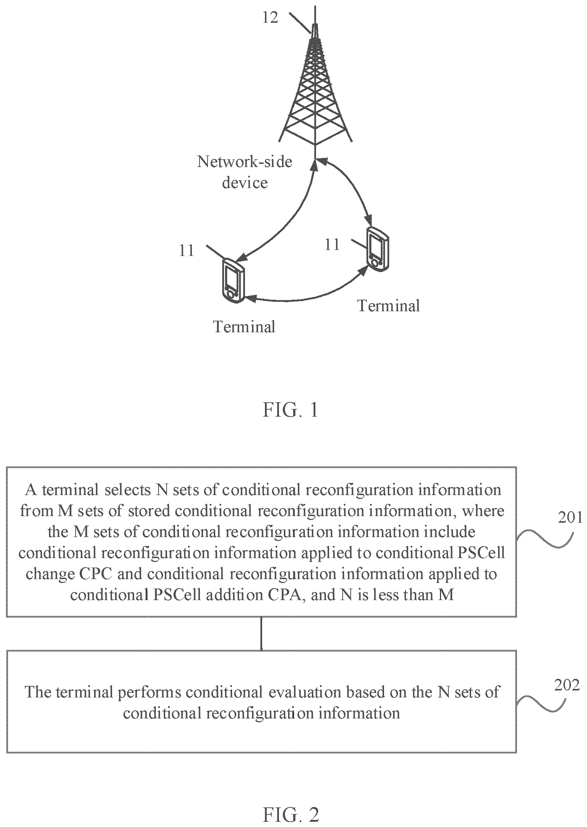

FIG. 1 is a block diagram of a wireless communication system to which the embodiments of this application are applicable. The wireless communication system includes a terminal 11 and a network-side device 12. The terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), or pedestrian user equipment (Pedestrian User Equipment, PUE), a smart home device (a home device with a wireless communication function, for example, a refrigerator, a television, a washing machine, or furniture), a game console, a personal computer (personal computer, PC), a teller machine, or a self-service machine. The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, or the like. It should be noted that the specific type of the terminal 11 is not limited in the embodiments of this application. The network-side device 12 may include an access network device or a core network device, where the access network device may also be referred to as a radio access network device, radio access network (Radio Access Network, RAN), radio access network function, or radio access network unit. The access network device may include base stations, wireless local area network (Wireless Local Area Networks, WLAN) access points, WiFi nodes, or the like. The base station may be referred to as Node B, evolved Node B (eNB), access point, base transceiver station (Base Transceiver Station, BTS), radio base station, radio transceiver, basic service set (Basic Service Set, BSS), extended service set (Extended Service Set, ESS), home Node B, home evolved Node B, transmitting receiving point (Transmitting Receiving Point, TRP), or other appropriate terms in the field. As long as the same technical effect is achieved, the base station is not limited to any specific technical terminology. It should be noted that in the embodiments of this application, only the base station in the NR system is introduced as an example, and the specific type of the base station is not limited.

To allow persons skilled in the art to better understand the embodiments of this application, the following description is provided.

### 1. Dual connectivity (Dual Connectivity, DC)

Dual Connectivity refers to that a network provides resources from two network nodes/base stations (access network elements) to UE, where one network node is referred to as a master node (Master Node, MN), and the other is referred to as a secondary node (Secondary Node, SN). Each network node can provide service to the UE by using one cell or using carrier aggregation (Carrier Aggregation, CA) technology, to be specific, multiple serving cells controlled by this node are configured for the UE. One or more cells controlled by one node form a cell group (Cell Group, CG). Cells controlled by the master node MN form a master cell group (Master Cell Group, MCG), and cells controlled by the secondary node SN form a secondary cell group (Secondary Cell Group, SCG). Each cell group includes a special cell (Special Cell, SpCell) and M secondary cells (Secondary Cell, Scell). In NR, M currently ranges from 0 to 31, and this range may be expanded in the future. In the MCG, the special cell is referred to as a primary cell (Primary Cell, PCell). In the SCG, the special cell is referred to as a primary secondary cell (Primary Secondary Cell, PSCell).

In NR, if UE uses an SCG configuration provided by a network (Network, NW) and including a synchronous reconfiguration indication (ReconfigurationWithSync IE), and the UE successfully completes RACH on a candidate/target PSCell, PSCell change is successfully performed for the UE.

### 2. Conditional PSCell change (Conditional PSCell Change, CPC) procedure

A network (NetWork, NW) pre-configures a CPC configuration for UE in a dual connectivity state, and the UE evaluates whether an execution condition is met. Once the execution condition is met, the UE performs PSCell change by using a pre-configured target secondary cell group (Secondary Cell Group, SCG) configuration.

### (1) The CPC configuration includes:

An execution condition: formed by N measurement identifiers (Measurement id). Each measurement identifier corresponds to a measurement event. When a measurement result of UE for a candidate cell Cell A meets a preset condition, the UE triggers a measurement event. When measurement events corresponding to the N measurement ids included in one execution condition are all triggered, the UE initiates a PSCell Change procedure to change a serving PSCell to Cell A, which is referred to as CPC being triggered. In NR, a value of N is 1 or 2.

Target SCG configuration parameters/conditional reconfiguration parameters: configuration parameters of an SCG including the PSCell that are used by the UE to change the serving PSCell to the Cell A. In NR, target SCG configuration parameters are carried in an RRC reconfiguration message including synchronous reconfiguration indication (ReconfigurationWithSync IE). This configuration includes an identifier of a candidate/target PSCell. Part of this configuration can be provided using delta configuration (delta config, that is, only providing parameters different from parameters of a serving SCG).

CPC configuration ID: One execution condition and one set of target SCG configuration parameters may be used in combination for a CPC procedure for one candidate PSCell. If there are N candidate cells, N execution conditions and N sets of target SCG configuration parameters may be configured for the UE to perform evaluation simultaneously. A final candidate/target PSCell is determined based on an evaluation result. One execution condition and one set of target SCG configuration parameters for one PSCell are associated with a CPC configuration identifier. To be specific, one execution condition and one set of target SCG configuration parameters associated with one CPC configuration identifier are used for one candidate PSCell.

(2) The measurement ids used in the CPC configuration are notified to the UE through measurement configuration parameters. A measurement configuration includes the following parameters:

Measurement object (Measurement Object, MO): a frequency point to be measured.

Report configuration (Report Config): including trigger conditions for measurement events, that is, indicating that when the signal quality of a candidate/target PSCell meets a preset condition (which is determined based on a measurement event type and a threshold parameter), a corresponding measurement event is triggered. For example, when RSRP of a candidate PSCell is 3 dB higher than RSRP of a current serving PSCell for 100 ms, a measurement event is triggered. (The quality of a candidate cell being higher than that of a serving cell is an event A3 indicates to be used in the report configuration; and 3 dB and 100 ms are threshold parameters indicated in the report configuration).

Measurement id (measId): a measurement identifier used to associate one MO with one event trigger condition.

Therefore, the execution conditions for the CPC configuration are associated with the measurement configuration.

In the related art, a CPC procedure includes the following processes.
(1) DC UE receives and saves measurement and CPC configurations sent by an NW side and then starts CPC evaluation.
(2) Once at least one execution trigger condition is met, the UE performs a corresponding PSCell change procedure.
(3) Once the UE successfully accesses to a candidate/target PSCell (successfully completing RACH on the candidate/target PSCell), the UE deletes all stored CPC configurations.

A specific example is provided below to help understand the existing CPC procedure.
(1) UE receives measurement and CPC-related configurations provided by an NW side, where the related configurations include the following two sets of CPC configurations.

| | First set | Second set |
|---|---|---|
| CPC configuration | ID is 1 and associated with: execution trigger condition: MeasId = 1; and target SCG configuration parameters: including a candidate/target PSCell as Cell A, and the like. | ID is 2 and associated with: execution trigger condition: MeasId = 2; and target SCG configuration parameters: including a candidate/target PSCell as Cell B, and the like. |
| Measurement configuration | | |
| MeasId | ID is 1 and associated with: measObjectId: 1; and reportConfigId: 1. | ID is 2 and associated with: measObjectId: 2; and reportConfigId: 2. |
| measObjectId | ID is 1, and a corresponding frequency point is F2. | ID is 2, and a corresponding frequency point is F1. |
| reportConfigId | ID is 1, and a corresponding measurement event and trigger condition are as follows: RSRP of a candidate/target PSCell is 3 dB higher than RSRP of a Serving PSCell for 100 ms. | ID is 2, and a corresponding measurement event and trigger condition are as follows: RSRP of a candidate/target PSCell is 4 dB higher than RSRP of a Serving PSCell for 80 ms. |

(2) The UE performs measurement evaluation. The UE measures a cell A (Cell A) at the frequency point F2 according to the first set of configurations; and the UE measures a cell B (Cell B) at frequency point F1 according to the second set of configurations.
(3) Once at least one execution trigger condition is met, the UE performs a corresponding PSCell change procedure.

Assuming that the execution trigger condition associated with the CPC configuration with ID being 1 is triggered, to be specific, the UE has measured that RSRP of the Cell A operating at the frequency point F2 is 3 dB higher than RSRP of the serving PSCell for 100 ms, and in other words, the measurement result of the UE for the Cell A meets the CPC execution trigger condition, the UE uses the target SCG configuration parameters associated with the CPC configuration with ID being 1, to be specific, the UE accesses to the candidate/target PSCell that is the Cell A by using the SCG configuration that Cell A is used as the PSCell.

(4) Once the UE successfully accesses to the Cell A (successfully completing RACH on the candidate/target PSCell/Cell A), the UE deletes all stored CPC configurations: the first and second sets of CPC configurations.

Optionally, an NW (target service base station) configures new CPC parameters for the UE, where the new CPC parameters configured may be the same as or different from the deleted CPC parameters.

### 3. Conditional PSCell addition (Conditional PSCell Addition, CPA)

Configuration methods and execution procedures of CPA and CPC are similar, except that during CPA evaluation, a trigger condition for applying SCG reconfiguration parameters is generally that the signal quality of the candidate/target PSCell is greater than a specified threshold for a pre-configured time. Because the UE has no serving PSCell in this case, the signal quality of the candidate/target PSCell cannot be compared with the signal quality of the serving PSCell.

It should be noted that CPC can also use the same trigger conditions as CPA, to be specific, the signal quality of the candidate/target PSCell is greater than the specified threshold for the pre-configured time. In this case, the PSCell change is performed without considering the signal quality of the serving (serving) PSCell, but only the signal quality of the candidate/target PSCell. This evaluation condition is generally used in a case where there is high load in the serving cell. In this case, even if the signal quality of the serving PSCell is high, the NW expects to change the PSCell of the UE to reduce the service load of the serving PSCell.

In the related art, the NW does not configure both CPA and CPC for the UE. In addition, once CPA or CPC is executed, the UE deletes all stored CPA or CPC configurations. Then, a serving NW configures a new configuration for the UE. For example, at a time point T1, the NW configures 2 sets of CPA configurations for the UE. The UE performs evaluation. After execution conditions for one set of configurations are met, the UE performs PSCell addition by using corresponding SCG configurations. The UE deletes all stored CPA configurations. At a subsequent time point T2, the NW can configure a new CPC configuration for the UE.

However, with evolution of CPA and CPC mechanisms, after execution of CPA or CPC, the UE can be enhanced to no longer delete the stored CPA and/or CPC configurations. In this case, the UE has both CPA and CPC configurations. For example, at the time point T1, the NW configures 2 sets of CPA configurations for the UE. The UE performs evaluation. After execution conditions for one set of configurations are met, the UE performs PSCell addition by using corresponding SCG configurations. At the subsequent time point T2, the NW can configure 2 sets of new CPC configurations for the UE. In this case, conditional reconfigurations stored in the UE include 1 set of CPA configurations and 2 sets of CPC configurations. In this case, assuming that the UE has deleted the used CPA configuration, if the used CPA configuration is not deleted, 2 sets of CPA configurations are stored in the UE. It should be noted that in the foregoing example, it is assumed that the used CPA configuration is deleted, but the solution of the embodiments of this application is also applicable to scenarios where the used CPA or CPC configuration is not deleted. Therefore, the embodiments of this application do not impose any limitations on this (whether the UE deletes the used CPA or CPC configuration). When both CPA and CPC configurations are stored in the UE, the UE performs CPC and CPA evaluations simultaneously. However, CPC and CPA are applied to UEs in different states (CPA is applied to UE in a single connectivity state, and CPC is applied to UE in a dual connectivity state). Therefore, performing CPC and CPA evaluations simultaneously is unnecessary and increases the power consumption of the UE.

The following describes in detail a method for processing conditional reconfiguration information provided in the embodiments of this application by using some embodiments and application scenarios thereof with reference to the accompanying drawings.

As shown in FIG. 2, an embodiment of this application provides a method for processing conditional reconfiguration information. The method includes the following steps.

Step 201: A terminal selects N sets of conditional reconfiguration information from M sets of stored conditional reconfiguration information, where the M sets of conditional reconfiguration information include conditional reconfiguration information applied to conditional PSCell change CPC and conditional reconfiguration information applied to conditional PSCell addition CPA, and N is less than M.

In this embodiment of this application, the M sets of conditional reconfiguration information include conditional reconfiguration information applied to conditional PSCell change CPC (CPC configuration information) and conditional reconfiguration information applied to conditional PSCell addition CPA (CPA configuration information). For example, the M sets of conditional reconfiguration information include X sets of CPC configuration information and Y sets of CPA configuration information, where X + Y ≥ M, and when X + Y > M, there is conditional reconfiguration information applied to both CPA and CPC.

Optionally, each set of conditional reconfiguration information includes:
one configuration identifier, an execution condition associated with the configuration identifier, a conditional reconfiguration parameter associated with the configuration identifier, and category information of conditional reconfiguration, where
the category information includes at least one of a CPC category, a CPA category, and a CPC and CPA category.

Here, the category information being the CPC category indicates that the set of conditional reconfiguration information is conditional reconfiguration information applied to CPC. The category information being the CPA category indicates that the set of conditional reconfiguration information is conditional reconfiguration information applied to CPA. The category information being the CPA and CPC category indicates that the set of conditional reconfiguration information is conditional reconfiguration information applied to both CPA and CPC.

Step 202: The terminal performs conditional evaluation based on the N sets of conditional reconfiguration information.

Here, the terminal performs CPA evaluation or CPC evaluation based on the N sets of selected conditional reconfiguration information.

In this embodiment of this application, the terminal selects N sets of conditional reconfiguration information from M sets of stored conditional reconfiguration information, where the M sets of conditional reconfiguration information include conditional reconfiguration information applied to conditional PSCell change CPC and conditional reconfiguration information applied to conditional PSCell addition CPA, and N is less than M; and the terminal performs conditional evaluation based on the N sets of conditional reconfiguration information. In the above process, the terminal selects N sets of conditional reconfiguration information from M sets of conditional reconfiguration information and performs conditional evaluation based on the N sets of conditional reconfiguration information, for example, performing only CPC evaluation or only CPA evaluation, rather than performing CPC evaluation and CPA evaluation based on the M sets of stored conditional reconfiguration information, thereby reducing the number of conditional reconfigurations that need to be evaluated by the terminal, and reducing the power consumption and evaluation complexity of the terminal.

In an optional implementation, that a terminal selects N sets of conditional reconfiguration information from M sets of stored conditional reconfiguration information includes:
selecting, based on a connectivity state of the terminal, the N sets of conditional reconfiguration information from the M sets of stored conditional reconfiguration information, where the connectivity state includes a single connectivity state or a dual connectivity state.

Optionally, the selecting, based on a connectivity state of the terminal, the N sets of conditional reconfiguration information from the M sets of stored conditional reconfiguration information includes at least one of the following:
in a case that the connectivity state of the terminal is the single connectivity state, selecting N sets of conditional reconfiguration information with category information being a first category from the M sets of conditional reconfiguration information, where the first category includes at least one of the CPC and CPA category and the CPA category; and
in a case that the connectivity state of the terminal is the dual connectivity state, selecting N sets of conditional reconfiguration information with category information being a second category from the M sets of conditional reconfiguration information, where the second category includes at least one of the CPC and CPA category and the CPC category.

In a specific embodiment of this application, a measurement configuration used for UE when operating on a source SCG is as shown in Table 1. The UE receives and saves the M sets of conditional reconfiguration information sent by a network. As shown in Table 2, the M sets of conditional reconfiguration information include one or more sets of conditional reconfiguration parameters (configuration parameters of the UE on a target SCG), and the configuration parameters include a measurement configuration for the UE on the target SCG. Each set of conditional reconfiguration parameters includes category information. The category information includes at least one of the following:
CPA: indicating that this set of configurations is applied to CPA;
CPC: indicating that this set of configurations is applied to CPC; and
CPA and CPC: indicating that this set of configurations may be applied to both CPA and CPC.

**Table 1**

| A measurement configuration used for UE at a Source-SN | | |
|---|---|---|
| MeasId | ID is 1, and this ID is associated with: measObjectId (measurement object identifier): 1; and reportConfigId (report configuration identifier): 1. | ID is 2, and this ID is associated with: measObjectId: 2; and reportConfigId: 2. |
| measObjectId | ID is 1, and a corresponding frequency point is F2. | ID is 2, and a corresponding frequency point is F1. |
| reportConfigId | ID is 1, and a corresponding measurement event and trigger condition are as follows: RSRP of a candidate/target PSCell is 3 dB higher than RSRP of a Serving PSCell for 100 ms. | ID is 2, and a corresponding measurement event and trigger condition are as follows: RSRP of a candidate/target PSCell reaches -100 dB for 80 ms. |

**Table 2**

| | First set | Second set |
|---|---|---|
| Conditional reconfiguration information | ID is 1 and associated with: execution trigger condition: MeasId = 1; and target SCG configuration parameters: including a candidate/target PSCell as Cell A. | ID is 2 and associated with: execution trigger condition: MeasId = 2; and target SCG configuration parameters: including a candidate/target PSCell as Cell B. |
| Category | CPA | CPA and CPC |

The category (or type) information of the conditional reconfiguration parameters can be indicated by explicit information elements (Information Element, IE) or implicitly indicated (for example, implicitly indicated by other IEs or combinations of IEs). This is not specifically limited in this embodiment of this application. Similarly, the type information of the conditional reconfiguration parameters can be explicitly stored or implicitly stored by saving other related IEs or combinations of IEs.

In this embodiment, the UE performs PSCell change (PSCell change), SCG addition (SCG addition), or SCG release (SCG release), and adds or deletes the stored CPC and CPA configurations according to a specified scheme. After execution of the specified scheme, the CPA and CPC configurations are still stored in the UE. The determining, by the UE based on its state, whether to evaluate the stored conditional reconfiguration includes at least one of the following:
a. if single connectivity is present, performing CPA evaluation and skipping performing CPC evaluation;
b. if dual connectivity is present, performing CPC evaluation and skipping performing CPA evaluation; and
c. if dual connectivity is present and at least one RLC bearer is established on an SCG, performing CPC evaluation and skipping performing CPA evaluation.

The performing CPA evaluation refers to performing evaluation based on the CPA configuration. The performing CPC evaluation refers to performing evaluation based on the CPC configuration. The skipping performing CPC evaluation refers to skipping or stopping performing evaluation based on the CPC configuration. The skipping performing CPA evaluation refers to skipping or stopping performing evaluation based on the CPA configuration.

One set of conditional reconfiguration is configured by the NW to be applied to CPA evaluation or CPC evaluation. If one set of conditional reconfiguration is applied to both CPA evaluation and CPC evaluation, regardless of whether the UE is to perform CPA evaluation or CPC evaluation, it is necessary to evaluate a configuration associated with this configuration, that is, to evaluate whether an execution trigger condition is met.

In this embodiment of this application, in a case that the connectivity state of the terminal is the single connectivity state, conditional reconfiguration information applied to CPA and/or both CPC and CPA is selected, so that the terminal can perform CPA evaluation based on the selected conditional reconfiguration information. Alternatively, in a case that the connectivity state of the terminal is the dual connectivity state, conditional reconfiguration information applied to CPC and/or both CPC and CPA is selected, so that the terminal can perform CPC evaluation based on the selected conditional reconfiguration information.

In another optional implementation, that a terminal selects N sets of conditional reconfiguration information from M sets of stored conditional reconfiguration information includes:
the terminal selects, based on indication information from a network-side device, the N sets of conditional reconfiguration information from the M sets of conditional reconfiguration information, where the indication information is used to indicate identifier information of conditional reconfiguration information that needs to be evaluated or does not need to be evaluated by the terminal.

Specifically, the indication information is determined by the network-side device based on a connectivity state of the terminal, and the connectivity state includes a single connectivity state or a dual connectivity state. For example, in a case that the connectivity state of the terminal connectivity state is the single connectivity state, the network-side device selects the conditional reconfiguration information of a first category and indicates identifier information of the conditional reconfiguration information of the first category to the terminal, to be specific, the network-side device indicates conditional reconfiguration information that needs to be evaluated to the terminal. Alternatively, the network-side device indicates identifier information of conditional reconfiguration information other than the conditional reconfiguration information of the first category to the terminal, to be specific, the network-side device indicates conditional reconfiguration information that does not need to be evaluated to the terminal. For another example, in a case that the connectivity state of the terminal is the dual connectivity state, the network-side device selects the conditional reconfiguration information of a second category and indicates identifier information of the conditional reconfiguration information of the second category to the terminal, to be specific, the network-side device indicates conditional reconfiguration information that needs to be evaluated to the terminal. Alternatively, the network-side device indicates identifier information of conditional reconfiguration information other than the conditional reconfiguration information of the second category to the terminal, to be specific, the network-side device indicates conditional reconfiguration information that does not need to be evaluated to the terminal.

In another specific embodiment of this application, a measurement configuration used for UE when operating on a source SCG is as shown in Table 1. The UE receives indication information from the NW, and the indication information includes an identifier of a conditional reconfiguration that needs to be evaluated, such as a conditional reconfiguration ID, specifically condReconfigId in the NR protocol. Based on the indication information, the UE evaluates a conditional reconfiguration corresponding to the conditional reconfiguration ID. To be specific, the UE evaluates a configuration associated with this configuration, that is, evaluating whether an execution trigger condition is met; and/or the UE stops evaluating a conditional reconfiguration other than an indicated conditional reconfiguration. In another implementation, the UE receives indication information from the NW, and the indication information includes an identifier of a conditional reconfiguration that does not need to be evaluated, such as a conditional reconfiguration ID. The UE stops evaluating an indicated conditional reconfiguration; and/or the UE evaluates a stored conditional reconfiguration other than the indicated conditional reconfiguration.

Optionally, for one conditional reconfiguration being evaluated, if an execution condition associated with this conditional reconfiguration has been determined to be met, when the UE stops evaluating this conditional reconfiguration, the execution condition associated with this conditional reconfiguration is determined or set to be not met.

Optionally, after the terminal performs conditional evaluation based on the N sets of conditional reconfiguration information, the method further includes:
after the terminal in the single connectivity state performs secondary cell group SCG addition, secondary node SN addition, or primary secondary cell PSCell addition, stopping evaluation of conditional reconfiguration information of the CPA category in the M sets of conditional reconfiguration information, and starting evaluation of other conditional reconfiguration information than the conditional reconfiguration information of the CPA category in the M sets of conditional reconfiguration information.

Optionally, the stopping evaluation of conditional reconfiguration information of the CPA category in the M sets of conditional reconfiguration information after the terminal in the single connectivity state performs secondary cell group SCG addition, secondary node SN addition, or primary secondary cell PSCell addition includes:
after the terminal in the single connectivity state performs secondary cell group SCG addition, secondary node SN addition, or primary secondary cell PSCell addition, and a radio link control (Radio Link Control, RLC) bearer is established on an SCG, stopping evaluation of the conditional reconfiguration information of the CPA category in the M sets of conditional reconfiguration information, and starting evaluation of other conditional reconfiguration information than the conditional reconfiguration information of the CPA category in the M sets of conditional reconfiguration information.

In a specific embodiment of this application, assuming that X sets of CPC configuration information and Y sets of CPA configuration information are stored in the UE, and the UE is in the single connectivity state and is evaluating execution conditions associated with Y sets of CPA configurations, when one set of CPA execution conditions are met (optionally, the UE establishes an RLC bearer on the SCG), the UE performs SCG addition, secondary node SN addition, or primary secondary cell PSCell addition (PSCell Addition), then the UE stops evaluation of the execution conditions associated with the Y sets of CPA configurations and starts evaluation of execution conditions associated with X sets of CPC configurations; where X + Y ≥ M, and when X + Y > M, there is conditional reconfiguration information applied to both CPA and CPC.

Optionally, after the terminal performs conditional evaluation based on the N sets of conditional reconfiguration information, the method further includes:
in a case that the terminal in the dual connectivity state has received an SN release command, stopping evaluation of conditional reconfiguration information of the CPC category in the M sets of conditional reconfiguration information, and starting evaluation of other conditional reconfiguration information than the conditional reconfiguration information of the CPC category in the M sets of conditional reconfiguration information.

In a specific embodiment of this application, assuming that X sets of CPC configuration information and Y sets of CPA configuration information are stored in the UE, the UE is in the dual connectivity state and is evaluating execution conditions associated with X sets of CPC configurations, then the UE receives the SN release command and performs SN release, the UE stops evaluation of the execution conditions associated with the X sets of CPC configurations and starts evaluation of execution conditions associated with Y sets of CPA configurations; where X + Y ≥ M, and when X + Y > M, there is conditional reconfiguration information applied to both CPA and CPC.

In the method for processing conditional reconfiguration information provided in this embodiment of this application, the terminal selects N sets of conditional reconfiguration information from M sets of stored conditional reconfiguration information, where the M sets of conditional reconfiguration information include conditional reconfiguration information applied to conditional PSCell change CPC and conditional reconfiguration information applied to conditional PSCell addition CPA, and N is less than M; and the terminal performs conditional evaluation based on the N sets of conditional reconfiguration information. In the above process, the terminal selects N sets of conditional reconfiguration information from M sets of conditional reconfiguration information and performs conditional evaluation based on the N sets of conditional reconfiguration information, for example, performing only CPC evaluation or only CPA evaluation, rather than performing CPC evaluation and CPA evaluation based on the M sets of stored conditional reconfiguration information, thereby reducing the number of conditional reconfigurations that need to be evaluated by the terminal, and reducing the power consumption and evaluation complexity of the terminal.

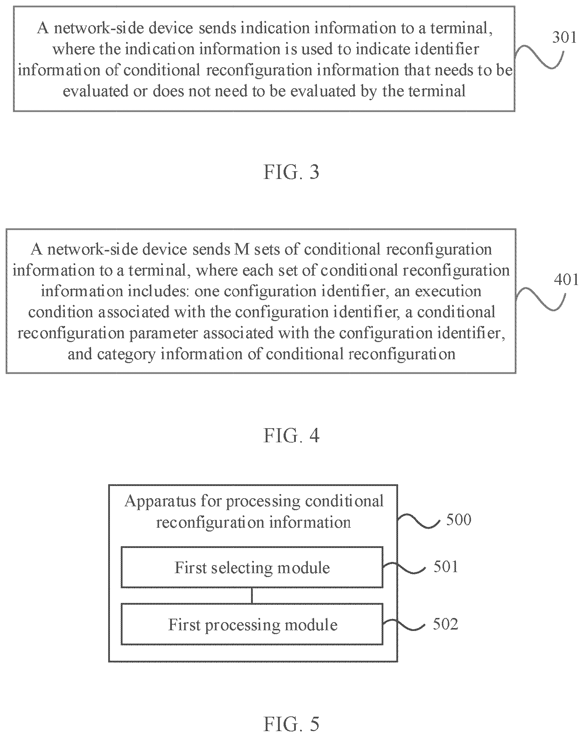

As shown in FIG. 3, an embodiment of this application further provides a method for processing conditional reconfiguration information. The method includes the following steps.

Step 301: A network-side device sends indication information to a terminal, where the indication information is used to indicate identifier information of conditional reconfiguration information that needs to be evaluated or does not need to be evaluated by the terminal.

Optionally, the indication information is determined based on a connectivity state of the terminal, and the connectivity state includes a single connectivity state or a dual connectivity state.

Specifically, the network-side device can send the above indication information through an explicit IE or can implicitly indicate the above indication information through a combination of IEs.

For example, in a case that the connectivity state of the terminal connectivity state is the single connectivity state, the network-side device selects the conditional reconfiguration information of a first category and indicates identifier information of the conditional reconfiguration information of the first category to the terminal, to be specific, the network-side device indicates conditional reconfiguration information that needs to be evaluated to the terminal. Alternatively, the network-side device indicates identifier information of conditional reconfiguration information other than the conditional reconfiguration information of the first category to the terminal, to be specific, the network-side device indicates conditional reconfiguration information that does not need to be evaluated to the terminal. For another example, in a case that the connectivity state of the terminal is the dual connectivity state, the network-side device selects the conditional reconfiguration information of a second category and indicates identifier information of the conditional reconfiguration information of the second category to the terminal, to be specific, the network-side device indicates conditional reconfiguration information that needs to be evaluated to the terminal. Alternatively, the network-side device indicates identifier information of conditional reconfiguration information other than the conditional reconfiguration information of the second category to the terminal, to be specific, the network-side device indicates conditional reconfiguration information that does not need to be evaluated to the terminal.

In this embodiment of this application, the network-side device sends indication information to the terminal, where the indication information is used to indicate identifier information of conditional reconfiguration information that needs to be evaluated or does not need to be evaluated by the terminal. The terminal selects, based on this indication information, N sets of conditional reconfiguration information from M sets of stored conditional reconfiguration information; and the terminal performs conditional evaluation based on the N sets of conditional reconfiguration information. In the above process, the terminal selects N sets of conditional reconfiguration information from M sets of conditional reconfiguration information and performs conditional evaluation based on the N sets of conditional reconfiguration information, for example, performing only CPC evaluation or only CPA evaluation, rather than performing CPC evaluation and CPA evaluation based on the M sets of stored conditional reconfiguration information, thereby reducing the number of conditional reconfigurations that need to be evaluated by the terminal, and reducing the power consumption and evaluation complexity of the terminal.

As shown in FIG. 4, an embodiment of this application further provides a method for processing conditional reconfiguration information. The method includes the following steps.

Step 401: A network-side device sends M sets of conditional reconfiguration information to a terminal, where each set of conditional reconfiguration information includes: one configuration identifier, an execution condition associated with the configuration identifier, a conditional reconfiguration parameter associated with the configuration identifier, and category information of conditional reconfiguration, where
the category information includes at least one of a CPC category, a CPA category, and a CPC and CPA category.

In this embodiment of this application, the network-side device sends M sets of conditional reconfiguration information to the terminal, where each set of conditional reconfiguration information includes: one configuration identifier, an execution condition associated with the configuration identifier, a conditional reconfiguration parameter associated with the configuration identifier, and category information of conditional reconfiguration, such that the terminal can select, based on this category information, N sets of conditional reconfiguration information from M sets of stored conditional reconfiguration information to perform conditional evaluation, rather than to perform CPC evaluation and CPA evaluation based on the M sets of stored conditional reconfiguration information, thereby reducing the number of conditional reconfigurations that need to be evaluated by the terminal, and reducing the power consumption and evaluation complexity of the terminal.

The method for processing conditional reconfiguration information provided in this embodiment of this application may be executed by an apparatus for processing conditional reconfiguration information. In an embodiment of this application, an apparatus for processing conditional reconfiguration information being used for executing the method for processing conditional reconfiguration information is used as an example to describe the apparatus for processing conditional reconfiguration information in this embodiment of this application.

As shown in FIG. 5, an embodiment of this application further provides an apparatus 500 for processing conditional reconfiguration information. The apparatus is applied to a terminal and includes:
a first selecting module 501 configured to select N sets of conditional reconfiguration information from M sets of stored conditional reconfiguration information, where the M sets of conditional reconfiguration information include conditional reconfiguration information applied to conditional PSCell change CPC and conditional reconfiguration information applied to conditional PSCell addition CPA, and N is less than M; and
a first processing module 502 configured to perform conditional evaluation based on the N sets of conditional reconfiguration information.

Optionally, each set of conditional reconfiguration information includes:
one configuration identifier, an execution condition associated with the configuration identifier, a conditional reconfiguration parameter associated with the configuration identifier, and category information of conditional reconfiguration, where
the category information includes at least one of a CPC category, a CPA category, and a CPC and CPA category.

Optionally, the first selecting module is configured to select, based on a connectivity state of the terminal, the N sets of conditional reconfiguration information from the M sets of stored conditional reconfiguration information, where the connectivity state includes a single connectivity state or a dual connectivity state.

Optionally, the first selecting module is configured to perform at least one of the following:
in a case that the connectivity state of the terminal is the single connectivity state, selecting N sets of conditional reconfiguration information with category information being a first category from the M sets of conditional reconfiguration information, where the first category includes at least one of the CPC and CPA category and the CPA category; and
in a case that the connectivity state of the terminal is the dual connectivity state, selecting N sets of conditional reconfiguration information with category information being a second category from the M sets of conditional reconfiguration information, where the second category includes at least one of the CPC and CPA category and the CPC category.

Optionally, the first selecting module is configured to select, based on indication information from a network-side device, the N sets of conditional reconfiguration information from the M sets of conditional reconfiguration information, where the indication information is used to indicate identifier information of conditional reconfiguration information that needs to be evaluated or does not need to be evaluated by the terminal.

Optionally, the first selecting module is configured to perform CPC evaluation based on the N sets of conditional reconfiguration information in a case that the terminal is in the dual connectivity state and at least one radio link control RLC bearer is established on a secondary cell group.

Optionally, the apparatus in this embodiment of this application further includes:
a second processing module configured to: after the first processing module performs conditional evaluation based on the N sets of conditional reconfiguration information, and the terminal in the single connectivity state performs secondary cell group SCG addition, secondary node SN addition, or primary secondary cell PSCell addition, stop evaluation of conditional reconfiguration information of the CPA category in the M sets of conditional reconfiguration information, and start evaluation of other conditional reconfiguration information than the conditional reconfiguration information of the CPA category in the M sets of conditional reconfiguration information.

Optionally, the second processing module is configured to: after the terminal in the single connectivity state performs secondary cell group SCG addition, secondary node SN addition, or primary secondary cell PSCell addition, and an RLC bearer is established on an SCG, stop evaluation of conditional reconfiguration information of the CPA category in the M sets of conditional reconfiguration information, and start evaluation of other conditional reconfiguration information than the conditional reconfiguration information of the CPA category in the M sets of conditional reconfiguration information.

Optionally, the apparatus in this embodiment of this application further includes:
a third processing module configured to: after the first processing module performs conditional evaluation based on the N sets of conditional reconfiguration information, in a case that the terminal in the dual connectivity state has received an SN release command, stop evaluation of conditional reconfiguration information of the CPC category in the M sets of conditional reconfiguration information, and start evaluation of other conditional reconfiguration information than the conditional reconfiguration information of the CPC category in the M sets of conditional reconfiguration information.

In this embodiment of this application, the terminal selects N sets of conditional reconfiguration information from M sets of stored conditional reconfiguration information, where the M sets of conditional reconfiguration information include conditional reconfiguration information applied to conditional PSCell change CPC and conditional reconfiguration information applied to conditional PSCell addition CPA, and N is less than M; and the terminal performs conditional evaluation based on the N sets of conditional reconfiguration information. In the above process, the terminal selects N sets of conditional reconfiguration information from M sets of conditional reconfiguration information and performs conditional evaluation based on the N sets of conditional reconfiguration information, for example, performing only CPC evaluation or only CPA evaluation, rather than performing CPC evaluation and CPA evaluation based on the M sets of stored conditional reconfiguration information, thereby reducing the number of conditional reconfigurations that need to be evaluated by the terminal, and reducing the power consumption and evaluation complexity of the terminal.

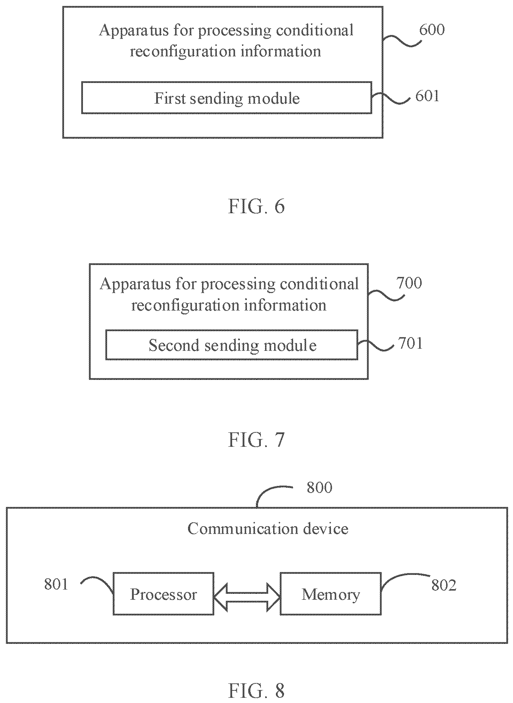

As shown in FIG. 6, an embodiment of this application further provides an apparatus 600 for processing conditional reconfiguration information. The apparatus is applied to a network-side device and includes:
a first sending module 601 configured to send indication information to a terminal, where the indication information is used to indicate identifier information of conditional reconfiguration information that needs to be evaluated or does not need to be evaluated by the terminal.

Optionally, the indication information is determined based on a connectivity state of the terminal, and the connectivity state includes a single connectivity state or a dual connectivity state.

In this embodiment of this application, the network-side device sends indication information to the terminal, where the indication information is used to indicate identifier information of conditional reconfiguration information that needs to be evaluated or does not need to be evaluated by the terminal. The terminal selects, based on this indication information, N sets of conditional reconfiguration information from M sets of stored conditional reconfiguration information; and the terminal performs conditional evaluation based on the N sets of conditional reconfiguration information. In the above process, the terminal selects N sets of conditional reconfiguration information from M sets of conditional reconfiguration information and performs conditional evaluation based on the N sets of conditional reconfiguration information, for example, performing only CPC evaluation or only CPA evaluation, rather than performing CPC evaluation and CPA evaluation based on the M sets of stored conditional reconfiguration information, thereby reducing the number of conditional reconfigurations that need to be evaluated by the terminal, and reducing the power consumption and evaluation complexity of the terminal.

As shown in FIG. 7, an embodiment of this application further provides an apparatus 700 for processing conditional reconfiguration information. The apparatus is applied to a network-side device and includes:
a second sending module 701 configured to send M sets of conditional reconfiguration information to a terminal, where each set of conditional reconfiguration information includes: one configuration identifier, an execution condition associated with the configuration identifier, a conditional reconfiguration parameter associated with the configuration identifier, and category information of conditional reconfiguration, where
the category information includes at least one of a CPC category, a CPA category, and a CPC and CPA category.

In this embodiment of this application, the network-side device sends M sets of conditional reconfiguration information to the terminal, where each set of conditional reconfiguration information includes: one configuration identifier, an execution condition associated with the configuration identifier, a conditional reconfiguration parameter associated with the configuration identifier, and category information of conditional reconfiguration, such that the terminal can select, based on this category information, N sets of conditional reconfiguration information from M sets of stored conditional reconfiguration information to perform conditional evaluation, rather than to perform CPC evaluation and CPA evaluation based on the M sets of stored conditional reconfiguration information, thereby reducing the number of conditional reconfigurations that need to be evaluated by the terminal, and reducing the power consumption and evaluation complexity of the terminal.

The apparatus for processing conditional reconfiguration information in this embodiment of this application may be an electronic device such as an electronic device with an operating system, or a component in an electronic device such as an integrated circuit or a chip. The electronic device may be a terminal or other devices than terminals. For example, the terminal may include but is not limited to the types of the terminal 11 listed above, and the other devices may be servers, network attached storage (Network Attached Storage, NAS), or the like, which are not specifically limited in this embodiment of this application.

The apparatus for processing conditional reconfiguration information provided in this embodiment of this application can implement the processes implemented in the method embodiments of FIG. 2 to FIG. 4, with the same technical effects achieved. To avoid repetition, details are not described herein again.

Optionally, as shown in FIG. 8, an embodiment of this application further provides a communication device 800 including a processor 801 and a memory 802. A program or instruction executable on the processor 801 is stored in the memory 802. For example, in a case that the communication device 800 is a terminal, when the program or instruction is executed by the processor 801, the steps of the foregoing terminal-side method embodiment are implemented, with the same technical effects achieved. In a case that the communication device 800 is a network-side device, when the program or instruction is executed by the processor 801, the steps of the foregoing network-side method embodiment are implemented, with the same technical effects achieved. To avoid repetition, details are not described herein again.

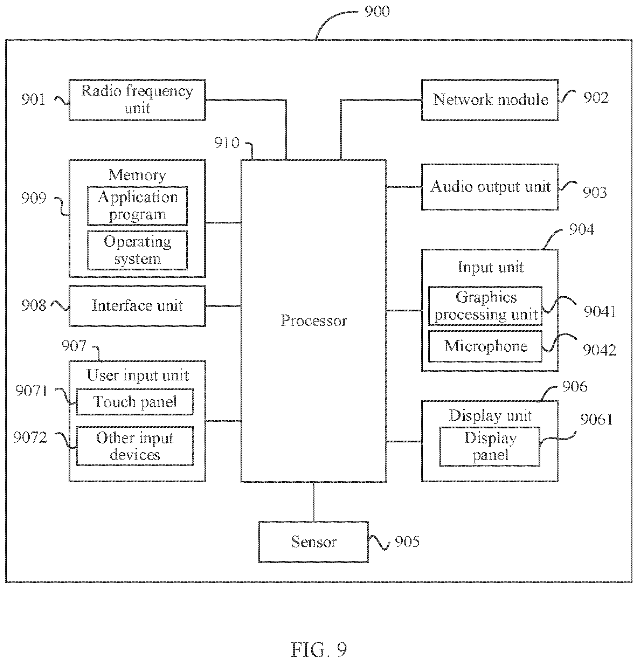

An embodiment of this application further provides a terminal including a processor and a communication interface, where the processor is configured to: select N sets of conditional reconfiguration information from M sets of stored conditional reconfiguration information, where the M sets of conditional reconfiguration information include conditional reconfiguration information applied to conditional PSCell change CPC and conditional reconfiguration information applied to conditional PSCell addition CPA, and N is less than M; and perform conditional evaluation based on the N sets of conditional reconfiguration information. This terminal embodiment corresponds to the foregoing terminal-side method embodiment. All processes and implementations in the foregoing method embodiment are applicable to this terminal embodiment, with the same technical effects achieved. Specifically, FIG. 9 is a schematic diagram of a hardware structure of a terminal implementing the embodiments of this application.

The terminal 900 includes but is not limited to at least some of these components: a radio frequency unit 901, a network module 902, an audio output unit 903, an input unit 904, a sensor 905, a display unit 906, a user input unit 907, an interface unit 908, a memory 909, a processor 910, and the like.

It can be understood by persons skilled in the art that the terminal 900 may further include a power supply (for example, a battery) supplying power to the components. The power supply may be logically connected to the processor 910 via a power management system, so that functions such as charge management, discharge management, and power consumption management are implemented via the power management system. The structure of the terminal shown in FIG. 9 does not constitute any limitations on the terminal, and the terminal may include more or fewer components than shown in the figure, or combine some of the components, or have different arrangements of the components. Details are not described herein.

It should be understood that in this embodiment of this application, the input unit 904 may include a graphics processing unit (Graphics Processing Unit, GPU) 9041 and a microphone 9042. The graphics processing unit 9041 processes image data of a still picture or video obtained by an image capture apparatus (such as a camera) in an image capture or video capture mode. The display unit 906 may include a display panel 9061. The display panel 9061 may be configured in a form of a liquid crystal display, an organic light-emitting diode display, or the like. The user input unit 907 includes at least one of a touch panel 9071 and other input devices 9072. The touch panel 9071 is also referred to as a touchscreen. The touch panel 9071 may include two parts: a touch detection apparatus and a touch controller. The other input devices 9072 may include but are not limited to a physical keyboard, a function button (for example, volume control button or on/off button), a trackball, a mouse, and a joystick. Details are not described herein.

In this embodiment of this application, the radio frequency unit 901 receives downlink data from a network-side device and transfers the data to the processor 910 for processing; and the radio frequency unit 901 can additionally send uplink data to the network-side device. Generally, the radio frequency unit 901 includes but is not limited to an antenna, an amplifier, a transceiver, a coupler, a low noise amplifier, a duplexer, and the like.

The memory 909 may be configured to store a software program or instruction and various data. The memory 909 may mainly include a first storage area for storing a program or instruction and a second storage area for storing data. The first storage area may store an operating system, an application program or instruction required by at least one function (for example, a sound playback function or an image playback function), and the like. Additionally, the memory 909 may include a volatile memory or a non-volatile memory, or the memory 909 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), or a direct rambus random access memory (Direct Rambus RAM, DRRAM). The memory 909 in this embodiment of this application includes but is not be limited to these or any other applicable types of memories.

The processor 910 may include one or more processing units. Optionally, the processor 910 may integrate an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 910.

The processor 910 is configured to: select N sets of conditional reconfiguration information from M sets of stored conditional reconfiguration information, where the M sets of conditional reconfiguration information include conditional reconfiguration information applied to conditional PSCell change CPC and conditional reconfiguration information applied to conditional PSCell addition CPA, and N is less than M; and perform conditional evaluation based on the N sets of conditional reconfiguration information.

In this embodiment of this application, the terminal selects N sets of conditional reconfiguration information from M sets of stored conditional reconfiguration information, where the M sets of conditional reconfiguration information include conditional reconfiguration information applied to conditional PSCell change CPC and conditional reconfiguration information applied to conditional PSCell addition CPA, and N is less than M; and the terminal performs conditional evaluation based on the N sets of conditional reconfiguration information. In the above process, the terminal selects N sets of conditional reconfiguration information from M sets of conditional reconfiguration information and performs conditional evaluation based on the N sets of conditional reconfiguration information, for example, performing only CPC evaluation or only CPA evaluation, rather than performing CPC evaluation and CPA evaluation based on the M sets of stored conditional reconfiguration information, thereby reducing the number of conditional reconfigurations that need to be evaluated by the terminal, and reducing the power consumption and evaluation complexity of the terminal.

Optionally, each set of conditional reconfiguration information includes:
one configuration identifier, an execution condition associated with the configuration identifier, a conditional reconfiguration parameter associated with the configuration identifier, and category information of conditional reconfiguration, where
the category information includes at least one of a CPC category, a CPA category, and a CPC and CPA category.

Optionally, the processor 910 is further configured to select, based on a connectivity state of the terminal, the N sets of conditional reconfiguration information from the M sets of stored conditional reconfiguration information, where the connectivity state includes a single connectivity state or a dual connectivity state.

Optionally, the processor 910 is further configured to perform at least one of the following:
in a case that the connectivity state of the terminal is the single connectivity state, selecting N sets of conditional reconfiguration information with category information being a first category from the M sets of conditional reconfiguration information, where the first category includes at least one of the CPC and CPA category and the CPA category; and
in a case that the connectivity state of the terminal is the dual connectivity state, selecting N sets of conditional reconfiguration information with category information being a second category from the M sets of conditional reconfiguration information, where the second category includes at least one of the CPC and CPA category and the CPC category.

Optionally, the processor 910 is further configured to select, based on indication information from a network-side device, the N sets of conditional reconfiguration information from the M sets of conditional reconfiguration information, where the indication information is used to indicate identifier information of conditional reconfiguration information that needs to be evaluated or does not need to be evaluated by the terminal.

Optionally, the processor 910 is further configured to perform CPC evaluation based on the N sets of conditional reconfiguration information in a case that the terminal is in the dual connectivity state and at least one radio link control RLC bearer is established on a secondary cell group.

Optionally, the processor 910 is further configured to: after the conditional evaluation is performed based on the N sets of conditional reconfiguration information, and the terminal in the single connectivity state performs secondary cell group SCG addition, secondary node SN addition, or primary secondary cell PSCell addition, stop evaluation of conditional reconfiguration information of the CPA category in the M sets of conditional reconfiguration information, and start evaluation of other conditional reconfiguration information than the conditional reconfiguration information of the CPA category in the M sets of conditional reconfiguration information.

Optionally, the processor 910 is further configured to: after the terminal in the single connectivity state performs secondary cell group SCG addition, secondary node SN addition, or primary secondary cell PSCell addition, and an RLC bearer is established on an SCG, stop evaluation of the conditional reconfiguration information of the CPA category in the M sets of conditional reconfiguration information, and start evaluation of other conditional reconfiguration information than the conditional reconfiguration information of the CPA category in the M sets of conditional reconfiguration information.

Optionally, the processor 910 is further configured to: after the conditional evaluation is performed based on the N sets of conditional reconfiguration information, in a case that the terminal in the dual connectivity state has received an SN release command, stop evaluation of conditional reconfiguration information of the CPC category in the M sets of conditional reconfiguration information, and start evaluation of other conditional reconfiguration information than the conditional reconfiguration information of the CPC category in the M sets of conditional reconfiguration information.

In this embodiment of this application, the terminal selects N sets of conditional reconfiguration information from M sets of stored conditional reconfiguration information, where the M sets of conditional reconfiguration information include conditional reconfiguration information applied to conditional PSCell change CPC and conditional reconfiguration information applied to conditional PSCell addition CPA, and N is less than M; and the terminal performs conditional evaluation based on the N sets of conditional reconfiguration information. In the above process, the terminal selects N sets of conditional reconfiguration information from M sets of conditional reconfiguration information and performs conditional evaluation based on the N sets of conditional reconfiguration information, for example, performing only CPC evaluation or only CPA evaluation, rather than performing CPC evaluation and CPA evaluation based on the M sets of stored conditional reconfiguration information, thereby reducing the number of conditional reconfigurations that need to be evaluated by the terminal, and reducing the power consumption and evaluation complexity of the terminal.

An embodiment of this application further provides a network-side device including a processor and a communication interface, where the communication interface is configured to send indication information to a terminal, where the indication information is used to indicate identifier information of conditional reconfiguration information that needs to be evaluated or does not need to be evaluated by the terminal; or the communication interface is configured to send M sets of conditional reconfiguration information to a terminal, where each set of conditional reconfiguration information includes: one configuration identifier, an execution condition associated with the configuration identifier, a conditional reconfiguration parameter associated with the configuration identifier, and category information of conditional reconfiguration, where the category information includes at least one of a CPC category, a CPA category, and a CPC and CPA category. This network-side device embodiment corresponds to the foregoing network-side device method embodiment. All processes and implementations in the foregoing method embodiment are applicable to this network-side device embodiment, with the same technical effects achieved.

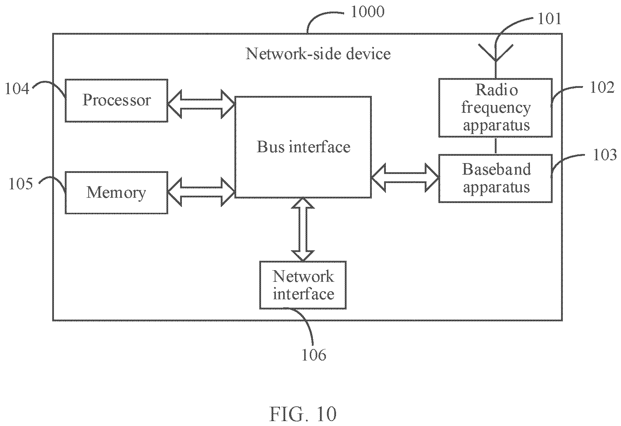

Specifically, an embodiment of this application further provides a network-side device. As shown in FIG. 10, the network-side device 1000 includes an antenna 101, a radio frequency apparatus 102, a baseband apparatus 103, a processor 104, and a memory 105. The antenna 101 is connected to the radio frequency apparatus 102. In an uplink direction, the radio frequency apparatus 102 receives information through the antenna 101, and sends the received information to the baseband apparatus 103 for processing. In a downlink direction, the baseband apparatus 103 processes to-be-sent information, and sends the information to the radio frequency apparatus 102; and the radio frequency apparatus 102 processes the received information and then sends the information out through the antenna 101.

The method executed by the network-side device in the foregoing embodiments may be implemented on the baseband apparatus 103. The baseband apparatus 103 includes a baseband processor.

The baseband apparatus 103 may include, for example, at least one baseband board, where a plurality of chips are disposed on the baseband board. As shown in FIG. 10, one of the chips is, for example, a baseband processor, and connected to the memory 105 through a bus interface, to invoke a program in the memory 105 to perform the operations of the network device shown in the foregoing method embodiments.

The network-side device may further include a network interface 106, where the interface is, for example, a common public radio interface (common public radio interface, CPRI).

Specifically, the network-side device 1000 in this embodiment of this application further includes: an instruction or program stored in the memory 105 and executable on the processor 104. The processor 104 invokes the instruction or program in the memory 105 to execute the method executed by the modules shown in FIG. 6 or 7, with the same technical effects achieved. To avoid repetition, details are not described herein again.

An embodiment of this application further provides a readable storage medium. A program or instruction is stored in the readable storage medium. When the program or instruction is executed by a processor, the processes of the method for processing conditional reconfiguration information in the foregoing embodiments are implemented, with the same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instruction to implement the processes of the method for processing conditional reconfiguration information in the foregoing embodiments, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program/program product, where the computer program/program product is stored in a storage medium, and the computer program/program product is executed by at least one processor to implement the processes of the method for processing conditional reconfiguration information in the foregoing embodiments, with the same technical effects achieved. To avoid repetition, details are not described herein again.

An embodiment of this application further provides a system for processing conditional reconfiguration information. The system includes a terminal and a network-side device. The terminal may be configured to execute the steps of the method for processing conditional reconfiguration information applied to the terminal. The network-side device may be configured to execute the steps of the method for processing conditional reconfiguration information applied to the network-side device.

It should be noted that in this specification, the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more constraints, an element preceded by "includes a..." does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

Based on the foregoing description of implementations, persons skilled in the art can clearly understand that the method in the foregoing embodiments can be implemented through software on a necessary hardware platform or certainly through hardware only, but in many cases, the former is the more preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. These specific implementations are merely for illustration rather than limitation. Inspired by this application, persons of ordinary skill in the art may develop many other forms without departing from the essence of this application and the protection scope of the claims, and all such forms shall fall within the protection scope of this application.

## Claims

1. A method for processing conditional reconfiguration information, comprising:
selecting, by a terminal, N sets of conditional reconfiguration information from M sets of stored conditional reconfiguration information, wherein the M sets of conditional reconfiguration information comprise conditional reconfiguration information applied to conditional primary secondary cell change CPC and conditional reconfiguration information applied to conditional primary secondary cell addition CPA, and N is less than M; and
performing, by the terminal, conditional evaluation based on the N sets of conditional reconfiguration information.

2. The method according to claim 1, wherein each set of conditional reconfiguration information comprises:
one configuration identifier, an execution condition associated with the configuration identifier, a conditional reconfiguration parameter associated with the configuration identifier, and category information of conditional reconfiguration, wherein
the category information comprises at least one of a CPC category, a CPA category, and a CPC and CPA category.

3. The method according to claim 2, wherein the selecting, by a terminal, N sets of conditional reconfiguration information from M sets of stored conditional reconfiguration information comprises:
selecting, based on a connectivity state of the terminal, the N sets of conditional reconfiguration information from the M sets of stored conditional reconfiguration information, wherein the connectivity state comprises a single connectivity state or a dual connectivity state.

4. The method according to claim 3, wherein the selecting, based on a connectivity state of the terminal, the N sets of conditional reconfiguration information from the M sets of stored conditional reconfiguration information comprises at least one of the following:
in a case that the connectivity state of the terminal is the single connectivity state, selecting N sets of conditional reconfiguration information with category information being a first category from the M sets of conditional reconfiguration information, wherein the first category comprises at least one of the CPC and CPA category and the CPA category; and
in a case that the connectivity state of the terminal is the dual connectivity state, selecting N sets of conditional reconfiguration information with category information being a second category from the M sets of conditional reconfiguration information, wherein the second category comprises at least one of the CPC and CPA category and the CPC category.

5. The method according to claim 1, wherein the selecting, by a terminal, N sets of conditional reconfiguration information from M sets of stored conditional reconfiguration information comprises:
selecting, by the terminal based on indication information from a network-side device, the N sets of conditional reconfiguration information from the M sets of conditional reconfiguration information, wherein the indication information is used to indicate identifier information of conditional reconfiguration information that needs to be evaluated or does not need to be evaluated by the terminal.

6. The method according to claim 1, wherein the performing, by the terminal, conditional evaluation based on the N sets of conditional reconfiguration information comprises:
performing CPC evaluation based on the N sets of conditional reconfiguration information in a case that the terminal is in a dual connectivity state and at least one radio link control RLC bearer is established on a secondary cell group.

7. The method according to any one of claims 2 to 5, wherein after the performing, by the terminal, conditional evaluation based on the N sets of conditional reconfiguration information, the method further comprises:
after the terminal in a single connectivity state performs secondary cell group SCG addition, secondary node SN addition, or primary secondary cell PSCell addition, stopping evaluation of conditional reconfiguration information of the CPA category in the M sets of conditional reconfiguration information, and starting evaluation of other conditional reconfiguration information than the conditional reconfiguration information of the CPA category in the M sets of conditional reconfiguration information.

8. The method according to claim 7, wherein the stopping evaluation of conditional reconfiguration information of the CPA category in the M sets of conditional reconfiguration information after the terminal in a single connectivity state performs secondary cell group SCG addition, secondary node SN addition, or primary secondary cell PSCell addition comprises:
after the terminal in the single connectivity state performs secondary cell group SCG addition, secondary node SN addition, or primary secondary cell PSCell addition, and an RLC bearer is established on an SCG, stopping evaluation of the conditional reconfiguration information of the CPA category in the M sets of conditional reconfiguration information, and starting evaluation of other conditional reconfiguration information than the conditional reconfiguration information of the CPA category in the M sets of conditional reconfiguration information.

9. The method according to any one of claims 2 to 6, wherein after the performing, by the terminal, conditional evaluation based on the N sets of conditional reconfiguration information, the method further comprises:
in a case that the terminal in a dual connectivity state has received an SN release command, stopping evaluation of conditional reconfiguration information of the CPC category in the M sets of conditional reconfiguration information, and starting evaluation of other conditional reconfiguration information than the conditional reconfiguration information of the CPC category in the M sets of conditional reconfiguration information.

10. A method for processing conditional reconfiguration information, comprising:
sending, by a network-side device, indication information to a terminal, wherein the indication information is used to indicate identifier information of conditional reconfiguration information that needs to be evaluated or does not need to be evaluated by the terminal.

11. The method according to claim 10, wherein the indication information is determined based on a connectivity state of the terminal, and the connectivity state comprises a single connectivity state or a dual connectivity state.

12. A method for processing conditional reconfiguration information, comprising:
sending, by a network-side device, M sets of conditional reconfiguration information to a terminal, wherein each set of conditional reconfiguration information comprises: one configuration identifier, an execution condition associated with the configuration identifier, a conditional reconfiguration parameter associated with the configuration identifier, and category information of conditional reconfiguration, wherein
the category information comprises at least one of a CPC category, a CPA category, and a CPC and CPA category.

13. An apparatus for processing conditional reconfiguration information, applied to a terminal and comprising:
a first selecting module configured to select N sets of conditional reconfiguration information from M sets of stored conditional reconfiguration information, wherein the M sets of conditional reconfiguration information comprise conditional reconfiguration information applied to conditional primary secondary cell change CPC and conditional reconfiguration information applied to conditional primary secondary cell addition CPA, and N is less than M; and
a first processing module configured to perform conditional evaluation based on the N sets of conditional reconfiguration information.

14. The apparatus according to claim 13, wherein each set of conditional reconfiguration information comprises:
one configuration identifier, an execution condition associated with the configuration identifier, a conditional reconfiguration parameter associated with the configuration identifier, and category information of conditional reconfiguration, wherein
the category information comprises at least one of a CPC category, a CPA category, and a CPC and CPA category.

15. The apparatus according to claim 14, wherein the first selecting module is configured to select, based on a connectivity state of the terminal, the N sets of conditional reconfiguration information from the M sets of stored conditional reconfiguration information, wherein the connectivity state comprises a single connectivity state or a dual connectivity state.

16. The apparatus according to claim 15, wherein the first selecting module is configured to perform at least one of the following:
in a case that the connectivity state of the terminal is the single connectivity state, selecting N sets of conditional reconfiguration information with category information being a first category from the M sets of conditional reconfiguration information, wherein the first category comprises at least one of the CPC and CPA category and the CPA category; and
in a case that the connectivity state of the terminal is the dual connectivity state, selecting N sets of conditional reconfiguration information with category information being a second category from the M sets of conditional reconfiguration information, wherein the second category comprises at least one of the CPC and CPA category and the CPC category.

17. The apparatus according to claim 13, wherein the first selecting module is configured to select, based on indication information from a network-side device, the N sets of conditional reconfiguration information from the M sets of conditional reconfiguration information, wherein the indication information is used to indicate identifier information of conditional reconfiguration information that needs to be evaluated or does not need to be evaluated by the terminal.

18. The apparatus according to claim 13, wherein the first selecting module is configured to perform CPC evaluation based on the N sets of conditional reconfiguration information in a case that the terminal is in a dual connectivity state and at least one radio link control RLC bearer is established on a secondary cell group.

19. The apparatus according to any one of claims 14 to 17, further comprising:
a second processing module configured to: after the first processing module performs conditional evaluation based on the N sets of conditional reconfiguration information, and the terminal in a single connectivity state performs secondary cell group SCG addition, secondary node SN addition, or primary secondary cell PSCell addition, stop evaluation of conditional reconfiguration information of the CPA category in the M sets of conditional reconfiguration information, and start evaluation of other conditional reconfiguration information than the conditional reconfiguration information of the CPA category in the M sets of conditional reconfiguration information.

20. The apparatus according to claim 19, wherein the second processing module is configured to: after the terminal in the single connectivity state performs secondary cell group SCG addition, secondary node SN addition, or primary secondary cell PSCell addition, and an RLC bearer is established on an SCG, stop evaluation of conditional reconfiguration information of the CPA category in the M sets of conditional reconfiguration information, and start evaluation of other conditional reconfiguration information than the conditional reconfiguration information of the CPA category in the M sets of conditional reconfiguration information.

21. The apparatus according to any one of claims 14 to 18, further comprising:
a third processing module configured to: after the first processing module performs conditional evaluation based on the N sets of conditional reconfiguration information, in a case that the terminal in a dual connectivity state has received an SN release command, stop evaluation of conditional reconfiguration information of the CPC category in the M sets of conditional reconfiguration information, and start evaluation of other conditional reconfiguration information than the conditional reconfiguration information of the CPC category in the M sets of conditional reconfiguration information.

22. An apparatus for processing conditional reconfiguration information, applied to a network-side device and comprising:
a first sending module configured to send indication information to a terminal, wherein the indication information is used to indicate identifier information of conditional reconfiguration information that needs to be evaluated or does not need to be evaluated by the terminal.

23. The apparatus according to claim 22, wherein the indication information is determined based on a connectivity state of the terminal, and the connectivity state comprises a single connectivity state or a dual connectivity state.

24. An apparatus for processing conditional reconfiguration information, applied to a network-side device and comprising:
a second sending module configured to send M sets of conditional reconfiguration information to a terminal, wherein each set of conditional reconfiguration information comprises: one configuration identifier, an execution condition associated with the configuration identifier, a conditional reconfiguration parameter associated with the configuration identifier, and category information of conditional reconfiguration, wherein
the category information comprises at least one of a CPC category, a CPA category, and a CPC and CPA category.

25. A terminal, comprising a processor and a memory, wherein a program or instruction executable on the processor is stored in the memory, and when the program or instruction is executed by the processor, the steps of the method for processing conditional reconfiguration information according to any one of claims 1 to 9 are implemented.

26. A network-side device, comprising a processor and a memory, wherein a program or instruction executable on the processor is stored in the memory, and when the program or instruction is executed by the processor, the steps of the method for processing conditional reconfiguration information according to claim 10 or 11 are implemented, or the steps of the method for processing conditional reconfiguration information according to claim 12 are implemented.

27. A readable storage medium, wherein a program or instruction is stored in the readable storage medium, and when the program or instruction is executed by a processor, the steps of the method for processing conditional reconfiguration information according to any one of claims 1 to 9 are implemented, or the steps of the method for processing conditional reconfiguration information according to claim 10 or 11 are implemented, or the steps of the method for processing conditional reconfiguration information according to claim 12 are implemented.
